# FASCICULE DE BREVET EUROPEEN

(11) **EP 3 729 464 B1**
(45) Date de publication et mention de la délivrance du brevet: **29.09.2021**
(21) Numéro de dépôt: 18842773.6
(22) Date de dépôt: 18.12.2018
(51) Int. Cl.: G21C 13/02, G21C 15/00

(54) **ENSEMBLE DE TRANQUILLISATION DE FLUX DE REACTEUR NUCLEAIRE**
STRÖMUNGSBERUHIGUNGSANORDNUNG FÜR KERNREAKTOR
NUCLEAR REACTOR FLOW CALMING ASSEMBLY

(30) Priorité: 19.12.2017 FR 1762458
(43) Date de publication de la demande: 28.10.2020
(73) Titulaire: Electricité de France, 75008 Paris (FR)
(72) Inventeur: HOWARD, Richard, 75017 PARIS (FR); XU, Tingting, BEIJING, 100005 (CN); BELLET, Serge, 69300 Caluire et Cuire (FR)
(74) Mandataire: Regimbeau
(86) Numéro de dépôt international: PCT/FR2018/053389
(87) Numéro de publication internationale: WO 2019/122699

(56) Documents cités:
- WO-A1-2013/159438
- CN-A- 103 971 763
- US-A- 2 990 349

## Description

### DOMAINE TECHNIQUE GÉNÉRAL ET ART ANTÉRIEUR

Le domaine de l'invention est celui des réacteurs nucléaires.

La présente invention concerne les écoulements dans la cuve des réacteurs des centrales nucléaires à eau pressurisée de deuxième ou troisième génération, pour lesquels le cœur est refroidi à l'aide d'un fluide caloporteur circulant à travers le cœur.

Classiquement, de tels systèmes comportent un cœur 1, comportant des éléments de combustible nucléaire, immergé dans un fluide caloporteur entraîné en circulation de manière à réaliser un échange thermique avec ledit cœur.

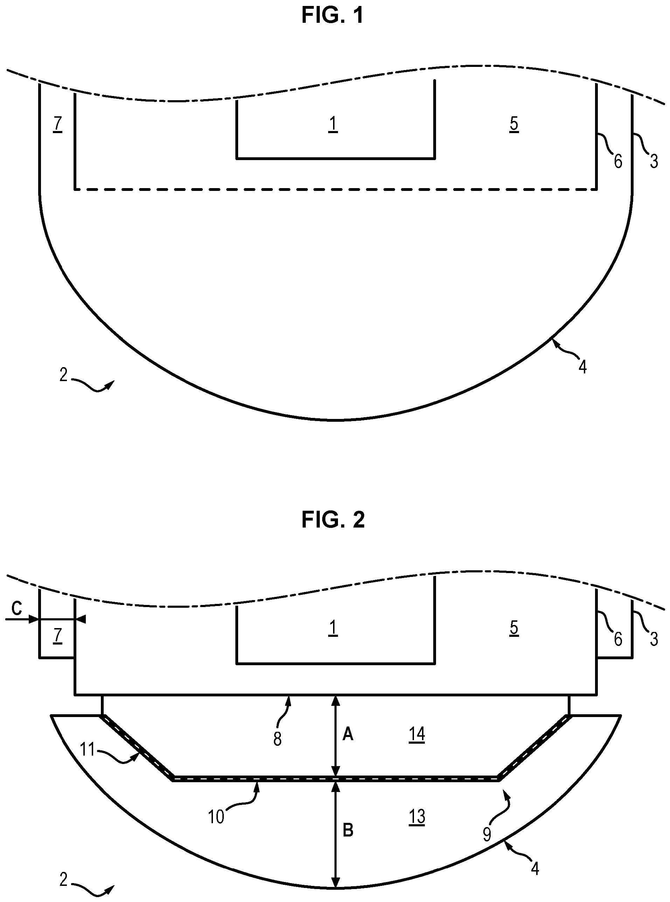

Le cœur 1 est classiquement contenu dans une cuve 2, illustrée en figure 1, dans laquelle circule le fluide caloporteur.

La cuve 2 est délimitée par une paroi extérieure 3 sensiblement cylindrique, l'extrémité inférieure de la cuve 2 étant fermée par un fond de cuve 4.

Classiquement, le fond de cuve 4 présente une forme sensiblement hémisphérique.

Une enceinte interne 5 est située à l'intérieur de la cuve 2.

L'enceinte interne 5 est délimitée par une paroi interne 6 sensiblement cylindrique ouverte à son extrémité inférieure.

La paroi interne 6 et la paroi externe 3 délimitent un circuit d'injection 7, le circuit d'injection 7 présentant une section sensiblement annulaire.

Le cœur 1 est classiquement situé à l'intérieur de l'enceinte interne 5.

Le fluide caloporteur circule classiquement dans le circuit d'injection 7 du haut vers le bas, puis se retourne au niveau du fond de cuve 4 pour circuler dans l'enceinte interne 5 du bas vers le haut, réalisant l'échange thermique avec le cœur 1.

Le retournement du fluide caloporteur en fond de cuve 4 provoque une distribution hétérogène de débits sur la section de l'enceinte interne 5, typiquement un fort surdébit au centre (15 à 20% du débit moyen) et un sous-débit en périphérie (du même ordre de grandeur que le surdébit).

Un écoulement hétérogène à l'entrée du cœur 1 modifie le fonctionnement du cœur 1.

Cette hétérogénéité d'alimentation provoque des écoulements dits transverses homogénéisant progressivement la répartition de débits à partir d'environ un quart de hauteur du cœur 1.

Ces courants transverses sont provoqués par un équilibrage physique lié à la pression, mais provoquent des excitations hydrauliques qui induisent des vibrations des crayons combustibles.

Les fluctuations, liées au fort taux de turbulence que rencontre l'écoulement pour se retourner, exacerbent l'excitation des assemblages combustibles.

L'exploitation des réacteurs est alors pénalisée par des usures provoquées par le fretting (il est entendu par fretting l'ensemble des phénomènes physiques particuliers d'usure, déformation, oxydation, corrosion, fissuration, adhésion ou autres modifications physicochimique, électrochimiques et structurale de la matière quand deux surfaces de même nature ou non sont en contact) des crayons mais également des déformations d'assemblages.

Ces hétérogénéités d'alimentation entraînent donc une dégradation sur le comportement thermohydraulique et neutronique de l'assemblage, sur les sollicitations mécaniques et ont ainsi une incidence sur le rendement et la durée de vie d'un assemblage.

Le maintien axial des assemblages combustibles par rapport aux forces d'envol provoquées par l'écoulement du fluide est donc déterminant pour la valeur maximale admise pour le débit thermohydraulique.

La valeur minimale du débit est associée à la fonction de refroidissement du cœur 1, la température du cœur 1 devant être maintenue en dessous d'un certain seuil pour éviter un endommagement du cœur 1.

Un trop brusque changement de section en sortie de l'espace annulaire vers le fond de cuve est une des sources principales de ces hétérogénéités de débit dans l'enceinte interne 5.

Classiquement, ces inconvénients sont limités par des marges de fonctionnement, limitant le débit admissible et donc les contraintes liées aux phénomènes de turbulences.

Il est également connu d'utiliser des structures permettant de tranquilliser le flux en entrée d'enceinte interne 5.

Les structures actuelles ont cependant été principalement conçues pour supporter l'instrumentation neutronique RIC interne du cœur, et ne présentent pas des performances optimales pour limiter les fluctuations liées au retournement du fluide.

Un réacteur d'art antérieur est connu du document WO 2013/159438 A1, qui décrit des moyens de tranquillisation.

### PRÉSENTATION GÉNÉRALE DE L'INVENTION

Un premier but de l'invention est de répartir le fluide de la façon la plus homogène vers l'entrée du cœur.

Un autre but est d'éviter des structures tourbillonnaires d'écoulement (souvent appelées « vortex ») de façon à ne pas engendrer de fluctuations de débits dans les assemblages.

Un autre but de l'invention est de limiter les contraintes mécaniques dans les structures supportant le cœur.

Un autre but de l'invention est d'augmenter la durée de vie et la maintenabilité des cuves.

Un autre but de l'invention est d'optimiser le dimensionnement du réacteur, notamment en matière de débit admissible par le cœur, afin d'étendre les plages de fonctionnement.

Pour cela, l'invention propose un réacteur nucléaire comportant :
a. Une cuve délimitée par une paroi externe et un fond de cuve,
b. Une enceinte délimitée par une paroi interne sensiblement cylindrique, l'enceinte étant située à l'intérieur de la cuve de telle sorte que la paroi interne et la paroi externe définissent un circuit d'injection de section sensiblement annulaire, l'extrémité basse de l'enceinte étant ouverte de manière à permettre à un fluide, injecté dans le circuit d'injection, de circuler vers le fond de cuve puis de pénétrer et de circuler à travers l'enceinte,
c. Un cœur situé à l'intérieur de l'enceinte,
d. Un élément de support situé au bas de l'enceinte, le support étant configuré pour maintenir des éléments de contrôle/commande du cœur,
e. Un élément de diffusion de flux configuré pour homogénéiser le flux entrant dans l'enceinte, l'élément de diffusion comportant une portion de surface plane sensiblement circulaire, la portion plane comportant une pluralité d'orifices,
caractérisé en ce que l'élément de diffusion définit une zone de mélange libre de tout obstacle entre ledit élément de diffusion et le fond de cuve, et en ce que les orifices présentent tous une section circulaire de même diamètre,
et en ce que la portion plane est située à une première distance du support et à une deuxième distance de la limite inférieure du fond de cuve , la deuxième distance étant supérieure à la première distance, la première distance étant supérieure à dix fois le diamètre des orifices.

L'invention peut avantageusement être complétée par l'une ou une combinaison des caractéristiques suivantes :
- l'élément de diffusion comporte en outre une portion de surface tronconique, la portion tronconique s'étendant en s'évasant depuis la portion plane, la portion tronconique comportant des orifices similaires aux orifices de la portion plane ;
- le diamètre des orifices est configuré pour favoriser l'écoulement vers le fond de cuve, vers la zone de mélange située en regard de la portion plane ;
- la section du circuit d'injection présente une épaisseur comprise entre trois et sept fois le diamètre des orifices ;
- l'élément de diffusion délimitant une zone d'admission entre ledit élément de diffusion et l'élément support, les orifices sont configurés pour que le fluide circulant dans la zone d'admission à proximité de la portion conique soit aspiré par le flux circulant entre la portion conique et le fond de cuve ;
- l'élément de diffusion comporte en outre des éléments de centrage s'étendant radialement depuis l'extrémité de la portion tronconique ;
- les éléments de centrage sont configurés pour mettre en position l'élément de diffusion par rapport à la cuve ;
- les éléments de centrage sont en outre configurés pour mettre en position l'élément de diffusion par rapport à l'enceinte.

Selon un deuxième aspect, l'invention concerne un élément de diffusion de flux entrant dans un cœur de réacteur nucléaire, l'élément de diffusion comportant :
a. une paroi, la paroi comportant une portion de surface plane sensiblement circulaire, la portion plane comportant une pluralité d'orifices,
b. une portion de surface tronconique s'étendant depuis la portion plane en s'évasant, la portion tronconique comportant une pluralité d'orifices,
c. des éléments de centrage,
caractérisé en ce que les orifices présentent tous une section circulaire de même diamètre,
et en ce que les éléments de centrage s'étendent radialement depuis l'extrémité de la portion tronconique.

Optionnellement mais avantageusement, les orifices s'étendent tous selon des axes parallèles entre eux.

Selon un troisième aspect, l'invention propose un procédé de tranquillisation de flux entrant dans un cœur de réacteur nucléaire selon l'invention, le procédé étant réalisé en mettant en circulation un fluide caloporteur à travers le circuit d'injection, le fluide circulant jusqu'au fond de cuve où il se retourne de manière à circuler à travers l'enceinte contenant le coeur,
caractérisé en ce que le fluide circule entre l'élément de diffusion et le fond de cuve en longeant la portion tronconique, ladite portion tronconique étant configurée pour diriger le flux vers la zone de mélange, ladite zone de mélange étant un espace dépourvu d'obstacles de manière à optimiser le retournement du flux, le flux circulant ensuite à travers l'élément de diffusion vers la zone d'admission, l'élément de diffusion étant configuré pour homogénéiser la répartition des débits sur une section de l'enceinte et limiter la formation de structures d'écoulement tourbillonnaires dans la zone d'admission, le fluide circulant dans la zone d'admission s'écoulant majoritairement vers l'enceinte, les orifices étant configurés pour que le fluide circulant dans la zone d'admission à proximité de la portion conique soit aspiré par le flux circulant entre la portion conique et le fond de cuve et soit ensuite dirigé vers la zone de mélange, de manière à homogénéiser la répartition des débits sur une section de l'enceinte.

### PRÉSENTATION DES FIGURES

D'autres caractéristiques et avantages de l'invention ressortiront encore de la description qui suit, laquelle est purement illustrative et non limitative, et doit être lue en regard des figures annexées sur lesquelles :
- la figure 1 est un schéma en coupe représentant les éléments constitutifs principaux d'une cuve de réacteur nucléaire ;
- la figure 2 est un schéma en vue de coupe représentant un ensemble de tranquillisation de flux conforme à l'invention ;
- la figure 3 est une modélisation 3D d'un élément de diffusion selon l'invention ;
- la figure 4 est une modélisation d'un ensemble de tranquillisation de flux selon l'invention, la cuve étant partiellement ouverte de manière à faire apparaître les éléments internes à la cuve ;
- la figure 5 est un schéma de fonctionnement d'un dispositif de tranquillisation de flux selon l'invention, représentant notamment la circulation du fluide lors du fonctionnement ;
- la figure 6 est un schéma représentant un réacteur selon l'invention, et notamment la circulation du fluide tranquillisée par un procédé selon l'invention.

### DESCRIPTION D'UN OU PLUSIEURS MODES DE MISE EN ŒUVRE ET DE RÉALISATION

L'invention s'applique à un ensemble de tranquillisation de flux d'entrée de cœur 1 de réacteur nucléaire, ledit ensemble, illustré en figure 2, comportant :
a. Une cuve 2 délimitée par une paroi externe 3 et un fond de cuve 4,
b. Une enceinte interne 5 délimitée par une paroi interne 6 sensiblement cylindrique, l'enceinte 5 étant située à l'intérieur de la cuve 2 de telle sorte que la paroi interne 6 et la paroi externe 3 définissent un circuit d'injection 7 de section sensiblement annulaire, l'extrémité basse de l'enceinte 5 étant ouverte de manière à permettre à un fluide, injecté dans le circuit d'injection 7, de circuler vers le fond de cuve 4 puis de pénétrer et de circuler à travers l'enceinte 5,
c. Un cœur 1 situé à l'intérieur de l'enceinte 5,
d. Un élément de support 8 situé au bas de l'enceinte 5.

L'élément de support 8 est configuré pour supporter l'instrumentation neutronique RIC (pour Réacteur Instrumentation Cœur) interne du cœur 1.

Dans le contenu de ce document, le haut et le bas sont définis en fonction de l'orientation de la cuve sur la figure 2, le fond de cuve 4 étant situé en bas de la cuve 2. Ceci n'est nullement limitatif, la structure pouvant s'appliquer quelle que soit l'orientation choisie pour la cuve 2 dans l'espace.

Les notions de radial et d'axial sont définies en fonction de l'axe X longitudinal selon lequel s'étend la cuve 1.

L'ensemble comporte en outre un élément de diffusion 9 de flux configuré pour homogénéiser le flux entrant dans l'enceinte 5.

L'élément de diffusion 9 comporte une portion de surface plane 10 sensiblement circulaire et une portion de surface sensiblement tronconique 11, la portion tronconique 11 s'étendant en s'évasant depuis la portion plane 10.

Dans le mode de réalisation illustré, la portion plane 10 est centrale et la portion conique 11 s'étend en s'évasant depuis la limite radialement extérieure de la portion plane 10.

La portion plane 10 et la portion tronconique 11 comportent chacune une pluralité d'orifices 12.

La portion plane 10 peut, dans d'autres modes de réalisation, présenter un profil bombé et présenter une courbure non nulle, le terme plane n'ayant pas un but limitatif.

La portion tronconique 11 peut également présenter une géométrie en portion de sphère, le terme tronconique n'étant ici pas limitatif.

Dans le mode de réalisation illustré, la portion tronconique 11 s'étend en s'évasant vers le haut de la cuve 2, mais il est envisageable dans d'autres modes de réalisation qu'une portion tronconique 11 s'étende depuis la portion plane 10 vers le bas de la cuve 2.

L'élément de diffusion 9 délimite une zone dite de mélange 13, située entre ledit élément de diffusion 9 et le fond de cuve 4, et une zone dite d'admission 14, située entre l'élément de diffusion 9 et l'élément de support 8, les orifices 12 mettant en communication fluidique les zones de mélange 13 et d'admission 14.

Plus précisément, la zone de mélange 13 est située en regard de la portion plane 10, entre la portion plane 10 et le fond de cuve 4.

Les orifices 12 présentent tous une section circulaire de même diamètre.

Le diamètre des orifices 12 est configuré pour favoriser l'écoulement vers la zone de mélange 13.

Plus précisément, les orifices 12, notamment leur géométrie, leur surface et leur inclinaison, sont configurés pour provoquer une perte de charge singulière permettant de favoriser ou non la circulation du fluide vers la zone d'admission 14 en fonction de la direction d'écoulement du fluide.

Par exemple, les orifices 12 sont configurés pour limiter la circulation de fluide vers la zone d'admission 14 par les orifices 12 de la section tronconique 11, l'orientation et le diamètre des orifices 12 étant configuré dans cette zone pour provoquer une perte de charge singulière suffisamment importante, compte tenu de la direction de l'écoulement entre la portion tronconique 11 et le fond de cuve 4, pour limiter la circulation du fluide vers la zone d'admission 14 à travers les orifices 12 de la portion tronconique 11.

Les orifices 12 sont donc configurés pour que le fluide circulant dans la zone d'admission 14 à proximité de la portion tronconique 11 soit aspiré par le flux circulant entre la portion tronconique 11 et le fond de cuve 4 et soit ensuite dirigé vers la zone de mélange 13, de manière à homogénéiser la répartition des débits sur une section de l'enceinte 5.

Le circuit d'injection 7 présentant une épaisseur C dans la direction radiale, l'épaisseur C étant configurée en fonction du débit admissible par le cœur 1, le diamètre des orifices 12 peut par exemple être compris entre 1/10 et ¼ de l'épaisseur C du circuit d'injection 7.

Dans un mode de réalisation préférentiel, le diamètre des orifices 12 est au moins cinq fois plus petit que l'épaisseur C du circuit d'injection 7 pour assurer que le fluide passe vers la zone de mélange avant d'être orienté vers la plaque inférieur de cœur (8).

La portion plane 10 est située à une première distance A de l'élément de support 8 et à une deuxième distance B de la limite inférieure du fond de cuve 4, ces distances étant exprimées suivant la direction axiale.

La première distance A est configurée pour limiter l'absorption par l'élément de diffusion 9 de radiations émises par le cœur 1.

La première distance A est également configurée de manière à favoriser la réduction de structures d'écoulement tourbillonnaires à l'entrée de l'enceinte 5.

La première distance A est configurée pour favoriser le mélange de chaque jet provenant de chaque orifice 12 de l'élément de diffusion 9.

Notamment, le mélange d'un jet est considéré parfait lorsque B=20 fois le diamètre d'un orifice 12. Le mélange d'un jet est considéré négligeable si la première distance A est inférieure à cinq fois le diamètre d'un orifice 12.

Par exemple, la première distance A est supérieure à dix fois le diamètre des orifices 12, de préférence supérieure ou égale à douze fois le diamètre des orifices 12.

La deuxième distance B est configurée pour former une zone de mélange 13 importante, permettant notamment un retournement du flux optimal avant de passer par les orifices de l'élément de diffusion 9, et permet également que le flux circule préférentiellement vers la zone d'admission 14 à travers la portion plane 10.

La deuxième distance B est préférentiellement supérieure à la première distance A, et représente par exemple quinze fois le diamètre d'un orifice 12.

Optionnellement, les orifices 12 s'étendent tous selon des axes parallèles entre eux.

Préférentiellement, la zone de mélange 13 est libre de tout obstacle, les éléments de contrôle commande RFI du cœur étant supportés par l'élément de support 8. Cela permet un retournement optimal du fluide, ce qui permet de limiter la formation de structures tourbillonnaires et d'homogénéiser la répartition des débits sur une section de l'enceinte 5.

Dans un mode de réalisation de l'élément de diffusion 9, chaque orifice 12 présente un diamètre compris entre 45mm et 70mm, par exemple de 56 mm, et est orienté dans la direction verticale.

La distance entre chaque orifice 12 peut être comprise entre 5mm et 25mm, par exemple de 10mm, dans le plan horizontal.

La portion plane 10 peut avoir un rayon compris entre 1000mm et 1500mm, par exemple de 1335mm, et une épaisseur comprise entre 10mm et 40mm, par exemple de 20 mm.

La portion plane 10 peut comporter entre 500 et 2000 orifices 12, par exemple 1201 orifices.

La première distance A peut être comprise entre 500mm et 1500mm, par exemple de 680mm.

La deuxième distance B peut être comprise entre 500mm et 3000mm, par exemple de 885mm, c'est-à-dire 15,8 fois le diamètre d'un orifice 12.

L'épaisseur C du circuit d'injection 7 peut être comprise entre 100mm et 1000mm, par exemple 290mm.

La portion tronconique 11 peut comporter entre 5 et 15 rangées d'orifices 12 dans la direction azimutale, par exemple 8 rangées, chacune des rangées pouvant comporter entre 100 et 200 orifices 12, par exemple 128 orifices 12.

La portion tronconique 11 peut donc comporter entre 500 et 3000 orifices 12, par exemple 1024 orifices 12.

L'élément de diffusion 9 peut donc comporter entre 1000 et 5000 orifices 12, par exemple 2225 orifices 12.

Le rayon externe de l'élément de support 8 peut être compris entre 1500mm et 3000mm, par exemple de 2144,7mm.

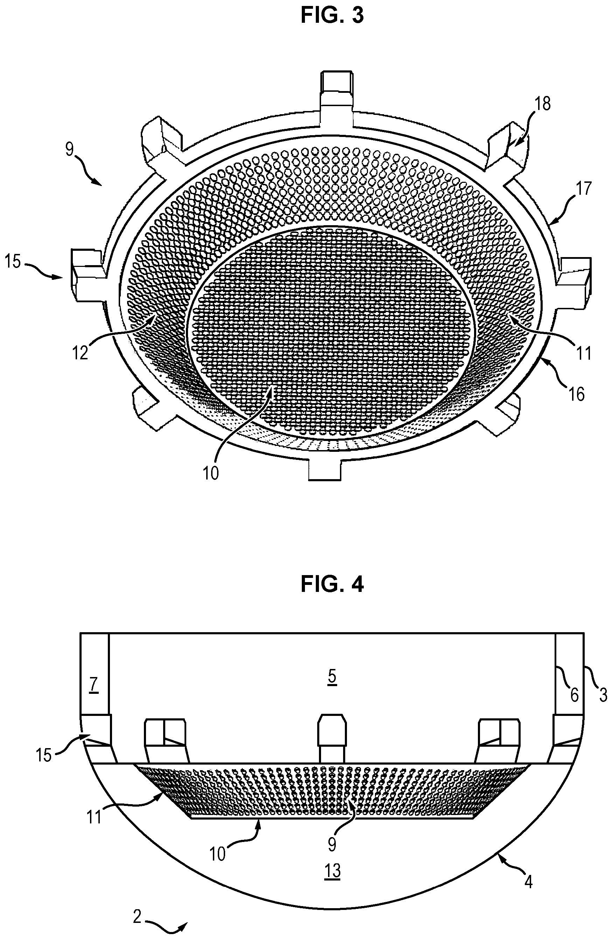

En référence à la figure 3, l'élément de diffusion 9 comporte des éléments de centrage 15 s'étendant radialement depuis l'extrémité de la portion tronconique 11.

Les éléments de centrage 15 sont configurés pour assurer la mise en position radiale de l'élément de diffusion 9 par rapport à la cuve 2.

Optionnellement, les éléments de centrage 15 peuvent également assurer la mise en position radiale de l'élément de diffusion 9 par rapport à l'enceinte 5 et la mise en position radiale de l'enceinte 5 par rapport à la cuve 2.

Dans le mode de réalisation représenté, les éléments de centrage 15 comportent :
- une bride radiale 16 s'étendant radialement depuis l'extrémité de la portion tronconique 11, la bride radiale 16 assurant la mise en position axiale de l'élément de diffusion 9 par rapport à l'enceinte 5,
- une collerette de centrage 17 sensiblement cylindrique s'étendant axialement depuis l'extrémité de la bride radiale 16, la collerette 17 assurant la mise en position radiale de l'élément de diffusion 9 par rapport à l'enceinte 5,
- une pluralité de pattes de centrage 18 s'étendant radialement depuis l'extrémité de la bride radiale 16, et s'étendant axialement au-delà de la collerette 17, les pattes 18 assurant la mise en position radiale de l'élément de diffusion 9 par rapport à la cuve 2 et assurant également la mise en position radiale de l'enceinte 5 par rapport à la cuve 2.

Optionnellement, le diamètre de l'élément de diffusion 9 représente entre 50 et 100 fois le diamètre d'un orifice 12, par exemple entre 70 et 80 fois.

Cela permet de limiter la première distance A, la deuxième distance B et l'épaisseur C en fonction du diamètre de l'élément de diffusion 9, permettant d'augmenter la compacité de l'ensemble et ainsi de minimiser sa réponse aux vibrations.

Optionnellement, les pattes 18 présentent en outre, à leur extrémité radialement extérieure, une géométrie configurée pour assurer la mise en position axiale de l'élément de diffusion 9 par rapport à la cuve 2 et la mise en positon axiale de l'enceinte 5 par rapport à la cuve 2.

Comme illustré en figure 4, les pattes 18 sont situées au niveau de la limite entre le fond de cuve 4 et la paroi extérieure 3. Les pattes 18 présentent une portion de surface qui coopère avec la surface interne du fond de cuve 4, permettant de réaliser la mise en position axiale de l'élément de diffusion 9 et de l'enceinte 5 par rapport à la cuve 2.

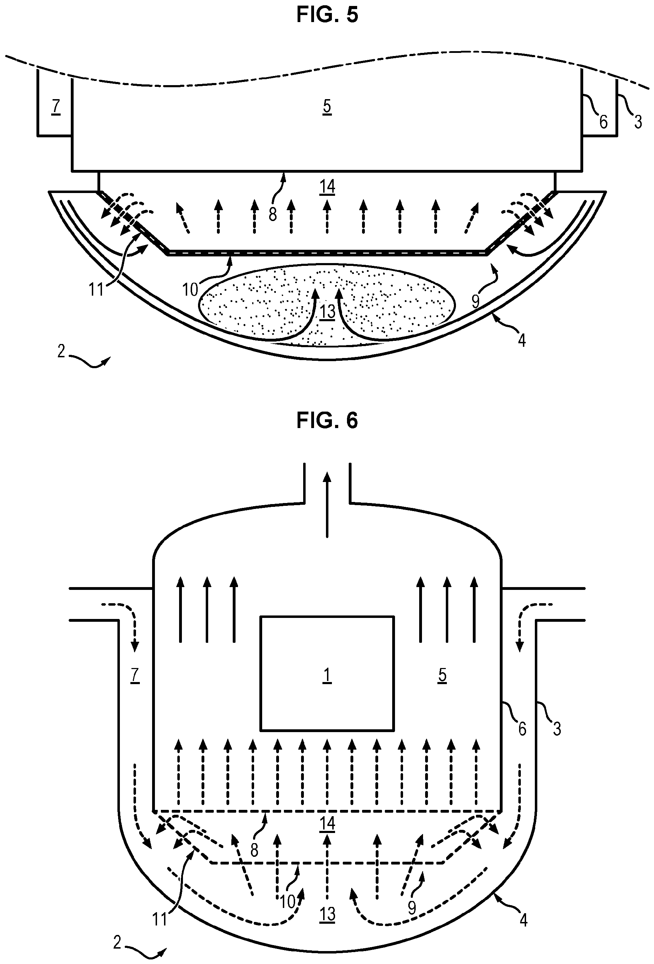

En référence aux figures 5 et 6, le fluide circule dans le circuit d'injection 7 du haut vers le bas, et circule ensuite entre le fond de cuve 4 et l'élément d'admission 9.

Le fluide est majoritairement canalisé vers la zone de mélange 13, notamment grâce à la configuration des orifices 12 et à la perte de charge qu'ils occasionnent lorsque le fluide circule à travers les orifices 12 dès qu'il sort du circuit d'injection 7.

Dans la zone de mélange 13, le fluide se retourne et circule vers la zone d'admission 14 à travers les orifices 12 de l'élément de diffusion 9, principalement à travers les orifices 12 de la portion plane 10, favorisant l'homogénéité des débits sur une section de l'enceinte 5.

Le retournement du fluide est favorisé par la configuration de la deuxième distance B, qui permet un retournement optimal du fluide et limite la présence de flux transversaux tout en optimisant la compacité de l'ensemble.

Dans la zone d'admission 14, une partie du fluide circulant au voisinage de la portion conique 11, notamment la partie haute de la portion conique 11, est aspiré à travers les orifices 12 de ladite portion conique 11.

Cette aspiration est causée par la dépression occasionnée par l'écoulement du fluide sortant du circuit d'injection 7 au voisinage des orifices 12 du haut de la portion conique 11.

En effet, la configuration des orifices 12 dans cette zone défavorise l'entrée du fluide dans la zone d'admission 14 par lesdits orifices 12, le fluide s'écoulant donc au voisinage de ces orifices 12 et causant une dépression aspirant le fluide situé dans la zone d'admission 14 au voisinage desdits orifices.

Plus particulièrement, le rapport entre l'épaisseur C de la section du circuit d'injection 7 et le diamètre des orifices 12, permet notamment de favoriser cet effet.

La circulation de fluide vers la zone d'admission 14 par la portion conique 11 est ainsi limitée, ce qui dirige le flux vers la zone de mélange 13 et favorise ainsi l'homogénéité des débits sur une section de l'enceinte 5.

Cet effet est notamment atteint par la configuration des pertes de charges des orifices 12 en fonction de la direction de l'écoulement du fluide.

Le fluide provenant de la zone de mélange 13 traverse l'élément de diffusion 9 et circule à travers l'enceinte 5, l'atténuation des structures tourbillonnaires étant favorisée par la première distance A séparant l'élément de diffusion 9 et l'élément de support 8.

L'homogénéité des débits sur une section de l'enceinte 5 permet de réduire l'apparition d'écoulements transverses dans l'enceinte 5, et permet donc de limiter les contraintes subies par le cœur 1 et donc l'usure prématurée dudit cœur 1.

La durée de vie et le rendement de l'ensemble s'en trouvent améliorés.

Les phénomènes de surdébit au centre d'une section d'enceinte 5 étant limités, il est possible d'augmenter le débit admissible par le cœur 1.

## Revendications

1. Réacteur nucléaire comportant :
a. Une cuve (2) délimitée par une paroi externe (3) et un fond de cuve (4),
b. Une enceinte (5) délimitée par une paroi interne (6) sensiblement cylindrique, l'enceinte (5) étant située à l'intérieur de la cuve (2) de telle sorte que la paroi interne (6) et la paroi externe (3) définissent un circuit d'injection (7) de section sensiblement annulaire, l'extrémité basse de l'enceinte (5) étant ouverte de manière à permettre à un fluide, injecté dans le circuit d'injection (7), de circuler vers le fond de cuve (4) puis de pénétrer et de circuler à travers l'enceinte (5),
c. Un cœur (1) situé à l'intérieur de l'enceinte (5),
d. Un élément de support (8) situé au bas de l'enceinte (5), le support (8) étant configuré pour maintenir des éléments de contrôle/commande du cœur (1),
e. Un élément de diffusion (9) de flux configuré pour homogénéiser le flux entrant dans l'enceinte (5), l'élément de diffusion (9) comportant une portion de surface plane (10) sensiblement circulaire, la portion plane (10) comportant une pluralité d'orifices (12),
**caractérisé en ce que** l'élément de diffusion (9) définit une zone de mélange (13) libre de tout obstacle entre ledit élément de diffusion (9) et le fond de cuve (4), et **en ce que** les orifices (12) présentent tous une section circulaire de même diamètre,
et **en ce que** la portion plane (10) est située à une première distance (A) du support (8) et à une deuxième distance (B) de la limite inférieure du fond de cuve (4), la deuxième distance (B) étant supérieure à la première distance (A), la première distance (A) étant supérieure à dix fois le diamètre des orifices (12).

2. Réacteur selon la revendication 1, dans lequel la première distance (A) est supérieure ou égale à 12 fois le diamètre des orifices (12), de manière à entraîner le mélange de chaque jet provenant de chaque orifice (12) de l'élément de diffusion (9).

3. Réacteur selon l'une des revendications précédentes, dans lequel l'élément de diffusion (9) comporte en outre une portion de surface tronconique (11), la portion tronconique (11) s'étendant en s'évasant depuis la portion plane (10), la portion tronconique (11) comportant des orifices (12) similaires aux orifices (12) de la portion plane (10).

4. Réacteur selon l'une des revendications précédentes, dans lequel la section du circuit d'injection (7) présente une épaisseur (C) comprise entre trois et sept fois le diamètre des orifices (12).

5. Réacteur selon l'une des revendications précédentes, dans lequel l'élément de diffusion (9) comporte en outre des éléments de centrage (15) s'étendant radialement depuis l'extrémité de la portion tronconique (11).

6. Réacteur selon la revendication 7, dans lequel les éléments de centrage (15) sont configurés pour mettre en position l'élément de diffusion (9) par rapport à la cuve (2).

7. Réacteur selon la revendication 8, dans lequel les éléments de centrage (15) sont en outre configurés pour mettre en position l'élément de diffusion (9) par rapport à l'enceinte (5).

8. Élément de diffusion (9) de flux entrant dans un cœur de réacteur nucléaire, l'élément de diffusion (9) comportant :
a. une paroi, la paroi comportant une portion de surface plane (10) sensiblement circulaire, la portion plane (10) comportant une pluralité d'orifices (12),
b. une portion de surface tronconique (11) s'étendant depuis la portion plane (10) en s'évasant, la portion tronconique (11) comportant une pluralité d'orifices (12),
c. des éléments de centrage (15),
**caractérisé en ce que** les orifices (12) présentent tous une section circulaire de même diamètre,
et **en ce que** les éléments de centrage (15) s'étendent radialement depuis l'extrémité de la portion tronconique (11).

9. Elément de diffusion (9) selon la revendication 8, dans lequel les orifices (12) s'étendent tous selon des axes parallèles entre eux.

10. Procédé de tranquillisation de flux entrant dans un cœur de réacteur nucléaire selon l'une des revendications 1 à 7, le procédé étant réalisé en mettant en circulation un fluide caloporteur à travers le circuit d'injection (7), le fluide circulant jusqu'au fond de cuve (4) où il se retourne de manière à circuler à travers l'enceinte (5) contenant le coeur (1),
**caractérisé en ce que** le fluide circule entre l'élément de diffusion (9) et le fond de cuve (4) en longeant la portion tronconique (11), ladite portion tronconique (11) étant configurée pour diriger le flux vers la zone de mélange (13), ladite zone de mélange (13) étant un espace dépourvu d'obstacles de manière à optimiser le retournement du flux, le flux circulant ensuite à travers l'élément de diffusion (9) vers la zone d'admission (14), l'élément de diffusion (9) étant configuré pour homogénéiser la répartition des débits sur une section de l'enceinte (5) et limiter la formation de structures d'écoulement tourbillonnaires dans la zone d'admission (14), le fluide circulant dans la zone d'admission (14) s'écoulant majoritairement vers l'enceinte (5), les orifices (12) étant configurés pour que le fluide circulant dans la zone d'admission (14) à proximité de la portion tronconique (11) soit aspiré par le flux circulant entre la portion tronconique (11) et le fond de cuve (4) et soit ensuite dirigé vers la zone de mélange (13), de manière à homogénéiser la répartition des débits sur une section de l'enceinte (5).

## Patentansprüche

1. Kernreaktor, umfassend:
a. ein Becken (2), das von einer Außenwand (3) und einem Beckenboden (4) begrenzt ist,
b. eine von einer deutlich zylindrischen Innenwand (6) begrenzte Einfassung (5), wobei die Einfassung (5) derart im Innern des Beckens (5) angeordnet ist, dass die Innenwand (6) und die Außenwand (3) eine Einspritz-Rundstrecke (7) mit einem deutlich ringförmigen Querschnitt definieren, wobei das untere Ende der Einfassung (5) derart offen ist, dass sie einer in die Einspritz-Rundstrecke (7) eingespritzten Flüssigkeit das Umlaufen zum Boden des Beckens (4) und dann das Eindringen und das Umlaufen durch die Einfassung (5) ermöglichen,
c. einen Kern (1), der im Innern der Einfassung (5) angeordnet ist,
d. ein Trägerelement (8), das unten an der Einfassung (5) angeordnet ist, wobei der Träger (8) ausgestaltet ist, um Kontroll-/Steuerelemente des Kerns (1) zu halten,
e. ein Verteilungselement (9) des Stroms, das zum Homogenisieren des in die Einfassung (5) eintretenden Stroms ausgestaltet ist, wobei das Verteilungselement (9) einen ebenen Oberflächenabschnitt (10) umfasst, der deutlich kreisförmig ist, wobei der ebene Abschnitt (10) eine Vielzahl von Öffnungen (12) umfasst,
**dadurch gekennzeichnet, dass** das Verteilungselement (9) einen Mischbereich (13) definiert, der von jedem Hindernis zwischen dem genannten Verteilungselement (9) und dem Beckenboden (4) frei ist, und dass die Öffnungen (12) alle einen kreisförmigen Querschnitt mit demselben Durchmesser aufweisen, und dass der ebene Abschnitt (10) in einer ersten Entfernung (A) des Trägers (8) und in einer zweiten Entfernung (B) der unteren Begrenzung des Beckenbodens (4) angeordnet ist, wobei die zweite Entfernung (B) größer ist als die erste Entfernung (A), wobei die erste Entfernung (A) zehn Mal größer ist als der Durchmesser der Öffnungen (12).

2. Reaktor gemäß Anspruch 1, bei dem die erste Entfernung (A) größer als oder gleich wie das 12-Fache des Durchmessers der Öffnungen (12) derart ist, dass die Mischung jedes Strahls, der von jeder Öffnung (12) des Verteilungselements (9) stammt, angetrieben ist.

3. Reaktor gemäß irgendeinem der voranstehenden Ansprüche, bei dem das Verteilungselement (9) darüber hinaus einen kegelförmigen Oberflächenabschnitt (11) umfasst, wobei sich der kegelförmige Abschnitt (11) von dem ebenen Abschnitt (10) in Erweiterung erstreckt, wobei der kegelförmige Abschnitt (11) den Öffnungen (12) des ebenen Abschnitts (10) ähnliche Öffnungen (12) umfasst.

4. Reaktor gemäß irgendeinem der voranstehenden Ansprüche, bei dem der Querschnitt des Einspritz-Rundwegs (7) eine zwischen dem Drei- und Siebenfachen des Durchmessers der Öffnungen (12) inbegriffene Dicke (C) aufweist.

5. Reaktor gemäß einem der voranstehenden Ansprüche, bei dem das Verteilungselement (9) darüber hinaus Zentrierungselemente (15) umfasst, die sich vom Ende des kegelförmigen Abschnitts (11) radial erstrecken.

6. Reaktor gemäß Anspruch 7, bei dem die Zentrierungselemente (15) ausgestaltet sind, um das Verteilungselement (9) im Verhältnis zum Becken (2) in Position zu bringen.

7. Reaktor gemäß Anspruch 8, bei dem die Zentrierungselemente (15) ausgestaltet sind, um das Verteilungselement (9) in Bezug auf die Einfassung (5) in Position zu bringen.

8. Verteilungselement (9) des in einen Kernreaktor-Kern eintretenden Stroms, wobei das Verteilungselement (9) umfasst:
a. eine Wand, wobei die Wand einen ebenen Oberflächenabschnitt (10), der deutlich kreisförmig ist, umfasst, wobei der ebene Abschnitt (10) eine Vielzahl von Öffnungen (12) umfasst,
b. einen kegelförmigen Oberflächenabschnitt (11), der sich von dem ebenen Abschnitt (10) in Erweiterung erstreckt, wobei der kegelförmige Abschnitt (11) eine Vielzahl von Öffnungen (12) umfasst,
c. Zentrierungselemente (15)
**dadurch gekennzeichnet, dass** die Öffnungen (12) alle einen kreisförmigen Querschnitt mit demselben Durchmesser aufweisen,
und dass die Zentrierungselemente (15) sich vom Ende des kegelförmigen Abschnitts (11) radial erstrecken.

9. Verteilungselement (9) gemäß Anspruch 8, bei dem die Öffnungen (12) sich alle gemäß zueinander parallelen Achsen erstrecken.

10. Beruhigungsverfahrens des Stroms, der in einen Kernreaktor-Kern eintritt, gemäß einem der Ansprüche 1 bis 7, wobei das Verfahren realisiert wird, indem eine Wärmeträgerflüssigkeit durch den Einspritz-Rundweg (7) in Umlauf gebracht wird, wobei die Flüssigkeit bis zum Beckenboden (4) umläuft, wo sie derart zurückfließt, dass sie durch die Einfassung (5) umläuft, die den Kern (1) enthält,
**dadurch gekennzeichnet, dass** die Flüssigkeit zwischen dem Verteilungselement (9) und dem Beckenboden (4) an dem kegelförmigen Abschnitt (11) umläuft, wobei der genannte kegelförmige Abschnitt (11) ausgestaltet ist, um den Strom zum Mischbereich (13) zu leiten, wobei der genannte Mischbereich (13) ein Raum ohne Hindernisse derart ist, dass die Rückführung des Stroms optimiert wird, wobei der Strom anschließend durch das Verteilungselement (9) zum Zulassungsbereich (14) umläuft, wobei das Verteilungselement (9) ausgestaltet ist, um die Verteilung der Durchsätze auf einem Querschnitt der Einfassung (5) zu homogenisieren und die Bildung von Wirbelströmungsstrukturen im Zulassungsbereich (14) zu begrenzen, wobei der Strom, der im Zulassungsbereich (14) umläuft, größtenteils zur Einfassung (5) abläuft, wobei die Öffnungen (12) ausgestaltet sind, damit die Flüssigkeit, die im Zulassungsbereich (14) in der Nähe des kegelförmigen Abschnitts (11) umläuft, von dem Strom angesaugt wird, der zwischen dem kegelförmigen Abschnitt (11) und dem Beckenboden (4) umläuft, und anschließend zum Mischbereich (13) derart geleitet wird, dass die Verteilung der Durchsätze auf einem Querschnitt der Einfassung (5) homogenisiert wird.

## Claims

1. Nuclear reactor comprising:
a. A vessel (2) delimited by an outer wall (3) and a vessel bottom (4),
b. An enclosure (5) delimited by a substantially cylindrical inner wall (6), the enclosure (5) being located inside the vessel (2) in such a way that the inner wall (6) and the outer wall (3) define an injection circuit (7) with a substantially annular cross-section, the low end of the enclosure (5) being open in such a way as to allow a fluid, injected into the injection circuit (7), to circulate to the vessel bottom (4) then to penetrate and to circulate through the enclosure (5),
c. A core (1) located inside the enclosure (5),
d. A support element (8) located at the bottom of the enclosure (5), the support (8) being configured for maintaining control/command elements of the core (1),
e. A diffusion element (9) of flows configured for making the flow entering into the enclosure (5) uniform, the diffusion element (9) comprising a substantially circular flat surface portion (10), the flat portion (10) including a plurality of orifices (12),
**characterised in that** the diffusion element (9) defines a mixing zone (13) free of any obstacle between said diffusion element (9) and the vessel bottom (4), and **in that** the orifices (12) all have a circular cross-section of the same diameter,
and **in that** the flat portion (10) is located at a first distance (A) from the support (8) and at a second distance (B) from the lower limit of the vessel bottom (4), the second distance (B) being greater than the first distance (A), the first distance (A) being ten times greater than the diameter of the orifices (12).

2. Reactor according to claim 1, wherein the first distance (A) is greater than or equal to 12 times the diameter of the orifices (12), in such a way as to drive the mixture of each stream coming from each orifice (12) of the diffusion element (9).

3. Reactor according to one of the preceding claims, wherein the diffusion element (9) further comprises a truncated surface portion (11), the truncated portion (11) extending by widening from the flat portion (10), the truncated portion (11) comprising orifices (12) similar to the orifices (12) of the flat portion (10).

4. Reactor according to one of the preceding claims, wherein the cross-section of the injection circuit (7) has a thickness (C) comprised between three and seven times the diameter of the orifices (12).

5. Reactor according to one of the preceding claims, wherein the diffusion element (9) further comprises centring elements (15) extending radially from the end of the truncated portion (11).

6. Reactor according to claim 7, wherein the centring elements (15) are configured for positioning the diffusion element (9) with respect to the vessel (2) .

7. Reactor according to claim 8, wherein the centring elements (15) are furthermore configured for positioning the diffusion element (9) in relation to the enclosure (5).

8. Diffusion element (9) of flows entering into a nuclear reactor core, the diffusion element (9) comprising:
a. a wall, the wall comprising a substantially circular flat surface portion (10), the flat portion (10) comprising a plurality of orifices (12),
b. a truncated surface portion (11) extending from the flat portion (10) by widening, the truncated portion (11) comprising a plurality of orifices (12),
c. centring elements (15),
**characterised in that** the orifices (12) all have a circular cross-section of the same diameter,
and **in that** the centring elements (15) extend radially from the end of the truncated portion (11).

9. Diffusion element (9) according to claim 8, wherein the orifices (12) all extend along axes parallel to one another.

10. Method for calming flows entering into a nuclear reactor core according to one of claims 1 to 7, the method being carried out by circulating a heat transfer fluid through the injection circuit (7), the fluid circulating to the vessel bottom (4) where it turns back in such a way as to circulate through the enclosure (5) containing the core (1),
**characterised in that** the fluid circulates between the diffusion element (9) and the vessel bottom (4) along the truncated portion (11), said truncated portion (11) being configured for directing the flows to the mixing zone (13), said mixing zone (13) being a space devoid of obstacles in such a way as to optimise the turnaround of the flow, the flow then circulating through the diffusion element (9) to the intake zone (14), the diffusion element (9) being configured for making the distribution of the flow rates uniform over the cross-section of the enclosure (5) and for limiting the formation of swirling flow structures in the intake zone (14), the fluid circulating in the intake zone (14) flowing mostly to the enclosure (5), the orifices (12) being configured so that the fluid circulating in the intake zone (14) in the vicinity of the truncated portion (11) is aspirated by the flow circulating between the truncated portion (11) and the vessel bottom (4) and is then directed to the mixing zone (13), in such a way as to make the distribution of the flow rates uniform over a cross-section of the enclosure (5).
